# EUROPEAN PATENT APPLICATION

(11) **EP 2 868 683 A1**
(43) Date of publication of application: **06.05.2015**
(21) Application number: 14191695.7
(22) Date of filing: 04.11.2014
(51) Int. Cl.: C08G 63/08, B01J 31/02, C08G 63/82, C08G 64/30

(54) **Catalyzed Polymerization of Cyclic Esters and Cyclic Carbonates**

(30) Priority: 05.11.2013 GB 201319499
(71) Applicant: Université de Mons, 7000 Mons (BE)
(72) Inventor: Dubois, Philippe Ghilain, B-4260 Ciplet (Braives) (BE); Guillerm, Brieuc, B-7000 Mons (BE); Coulembier, Olivier, B-7904 Braffe (BE)
(74) Representative: Farmer, Guy Dominic

(57) **Abstract**

The present invention relates to a process for the preparation of polyesters or polycarbonates comprising (i) the provision of cyclic esters or cyclic carbonates, (ii) polymerizing by ring-opening in the presence of a betaine based metal-free catalyst showing formula

-X-R₁-Y⁺(R₂)₃

wherein X is S, O or Se,
Y is N or P,
R₁ is linear or cyclic alkyl or aryl, and
R₂ is linear or cyclic alkyl.
and under polymerizing conditions in the presence of an alcohol or amine based initiator.

## Description

The present invention relates to a process for the preparation of polyesters or polycarbonates by ring-opening polymerisation of cyclic esters or cyclic carbonates.

Polycarbonates and polylactides (PLAs) are known to be biodegradable and biocompatible. Further considering that the lactide may be produced from lactic acid which in turn may be obtained by fermentation of renewable resources, such as corn or sugar beet, such polymers are produced for use in a large number of applications ranging from food packaging to microelectronics applications and including biomedical and pharmaceutical applications.

Polymerization by ring-opening has gained increasing interest in the last decades. More particularly with respect to the ring-opening polymerization of dilactones, a lot of attention has been drawn toward the lactic acid dimer, also called lactide, optically active or not, which may be used for the preparation of polylactides (PLAs). Such PLAs may be isotactic, syndiotactic or atactic depending on the monomer used.

So far, ring-opening polymerization is perceived as being the most suitable synthesis method for polyesters and polycarbonates, not the least because of the moderate reaction conditions required. Several ring-opening methods have been developed and they are classified by mode of action, such as the anionic method, the cationic method and the coordination method. However, the ionic methods require anhydrous conditions, high purity monomers, and furthermore, are prone to give rise to side reactions.

Research has led to the development of metal-based catalysts for such reactions. Metal based catalysts, such as tin (II) octanoate, aluminum triisopropylate or zinc lactate, may have an undesirable effect on the performances of the polymers, more specifically in microelectronic applications and in pharmaceutical applications as drug vehicles. Research has thus been directed toward metal free catalysts and compounds such as 4-dimethylaminopyridine, phosphines, Brönsted acids, thiourea-amine complexes, N-heterocyclic carbenes and phosphazenes have been used.

In order to comply with ever more stringent environmental requirements, solvent free processes are preferred. Known metal-free catalysts, however, do not allow the high yield production of high molecular weight polymers in short reaction times, in the absence of a solvent.

In addition, it has been shown that such metal-free catalysts may degrade the polymer, give rise to undesired transesterification reactions or co-initiating reactions. Finally, the high temperatures used for polymerization may degrade the catalysts.

There is thus a need for metal-free catalysts suitable for the above polymerization reactions by ring-opening.

The invention hence seeks to provide a new process for the ring-opening polymerization of cyclic esters or cyclic carbonates.

Another purpose of the invention is to provide a ring-opening polymerization process leading to high molecular weight polyesters or polycarbonates as catalyzed by metal-free catalysts.

A further purpose is to provide a process as mentioned above that can be performed at high temperatures.

Yet another purpose is to provide a process as mentioned above that can be performed in the absence of solvent.

The present invention now provides a process for the preparation of polyesters or polycarbonates comprising the provision of cyclic esters or cyclic carbonates, polymerizing by ring-opening in the presence of a betaine based metal-free catalyst and under polymerizing conditions.

Betaine compounds are known compounds which include an anionic group -X- and a cationic group -(R₂)₃Y⁺.

Preferred betaine compounds for use in the invention process show the following formula

-X-R₁-Y⁺(R₂)₃

wherein X may be S, O or Se,
Y may be N or P,
R₁ may be linear or cyclic alkyl or aryl, and
R₂ may be linear or cyclic alkyl.

Such compounds are known in the state-of-the-art and may be obtained by a process as described in Org. Letter 2010, 12(24), 5728-5731. They have already been used as catalysts for organic reactions of small molecules, but not for polymer synthesis, such as the synthesis starting from lactide and/or trimethylene carbonate.

In order to initiate polymerization, the polymerizing conditions of the invention process advantageously include the presence of an alcohol or an amine based initiator. Such initiator may show the chemical formula R(X-H)ₙ wherein X is NH or O and R is a substituted or non-substituted alkyl or ether group. Examples of alcohol based initiator compounds are 2-propanol, 1-butanol, 1-hexanol, 1-octanol, 1-pyrenemethanol, 9-anthracenemethanol, poly(oxyethylene) α-methyl, ω-hydroxyl, 1,3-propanediol, 1,3-butanediol, 1,4-butanediol, 1,6-butanediol, 1,6-hexanediol, 1,7-heptanediol, 1,8-octanediol, poly(oxyethylene)α,-hydroxyl. Examples of amine based initiator compounds include propylamine, n-butylamine, hexylamine, octylamine, 1-aminopyrene, 1-aminoanthracene, 1,4-butanediamine, 1,6-hexanediamine, 1,4-cyclohexanediamine, 1,4-phenyldiamine and Jeffamines®.

Betaine based catalysts as used in the invention process show two functional groups: the (R₂)Y⁺ cationic group capable of interacting with the carbonyl functions of the cyclic ester or cyclic carbonate monomers, and the anionic group capable of forming hydrogen links with the initiator.

The invention process may be performed in the absence or in the presence of organic solvent. Such organic solvents include halogenated or non-halogenated hydrocarbons, such as tetrahydrofuran (THF), chloroform (CHCl₃), dichloromethane, 1,4-dioxane or toluene. THF and CHCl₃ are preferred, CHCl₃ being the most preferred. Monomer concentrations in the solvent may range from 10 to 60% by weight of total mix. The presence of water has to be avoided.

The catalyst concentration varies from 0.1 to 10 mol% based on the monomer, preferably from 0.5 to 3%, more preferably from 1 to 2%.

The invention process may be performed in the absence or in the presence of adjuvants, such as antioxidants. Such antioxidants may include ultranox 626®, irganox 1024®, preferably ultranox 626®.

When the polymerization is performed in the absence of solvent, it may be performed at temperatures ranging from 80 to 200°C, preferably from 100 to 180°C, more particularly from 130 to 180°C. It has been found that the invention process can be performed in the absence of solvent and at such temperatures with reduced side reactions and with improved catalyst stability as compared to prior art processes.

When performed in the presence of solvent such as CHCl₃, the polymerization may be carried out at temperatures ranging from 0 to 100°C, preferably from 10 to 50°C and more particularly from 20 to 40°C.

The reaction time is comprised between 3 min and 168 hours, preferably between 3 min and 4 hours, more preferably between 3 min and 1 hour.

The ring-opening polymerization related in this invention may be performed under pressure conditions ranging from ambient pressure to 90 bar, more particularly from ambient to 80 bar.

The amount of initiator is chosen such that the molar ratio between monomer and initiator is comprised between 20/1 and 2000/1, preferably between 30/1 and 750/1, more particularly between 50/1 and 500/1.

Monomeric cyclic ester compounds suitable for the invention process include compounds showing the following formula 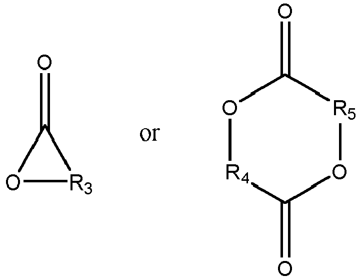 wherein R₃ is a substituted or non-substituted alkyl group showing 3 to 20 carbon atoms, preferably 3 to 10 carbon atoms, more particularly 3 to 5 carbon atoms; and R₄ and R₅ are alkyl groups of 1 to 20 carbon atoms, preferably 1 to 10 carbon atoms, more particularly 1 to 5 carbon atoms.

Examples of monomeric cyclic esters for the polymerization of polyesters according to the invention include L,L-lactide, D,D-lactide, rac-lactide and ε-caprolactone.

Monomeric cyclic carbonate compounds suitable for the invention process include compounds showing the following formula 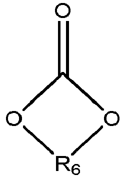 wherein R₆ is a substituted or non-substituted alkyl group showing 1 to 20 carbon atoms, preferably 1 to 10 carbon atoms, more particularly 2 to 5 carbon atoms.

Examples of monomeric cyclic carbonates include trimethylenecarbonate and benzylester trimethylenecarbonate (Chem.Commun., 2008, 114-116).

Bifunctional catalysts have already been evaluated in the ring-opening polymerization of cyclic esters or cyclic carbonates. An example of such bifunctional catalysts for L-LA polymerization is a thiourea-amine based system. This type of catalysts is able to generate PLA of comparable molecular weight after 32 hours of reaction. In contrast, it has been found that the invention process is capable of generating corresponding PLA after 1 hour of reaction. Another example of known bifunctional catalysts is an amine-phenol based system. Here again, at least 14 hours are required to generate polymers of equivalent molecular weight. In contrast thereto, the invention process is capable of generating comparable polycarbonates in 24 hours while a thio-urea based system will require 6 days.

The polyesters or polycarbonates obtained by the process of the present invention are characterized by the absence of metallic catalyst traces. As a result, they may find application in packaging, more particularly food packaging, for example packaging sheets, in fibers, more particularly textile fibers, in electronics, e.g. printed circuit boards, integrated circuit chips, and in the medical area, including chirurgical and pharmaceutical applications, such as suture material, implants, active ingredient vector, and other applications.

The present invention will be further illustrated in the following examples, without limitation thereto. In the following examples and comparative examples, the mean molecular weight (Mn) and monomer to polymer conversion rate has been determined by Size Exclusion Chromatography (SEC) in CHCl₃ at 30°C, after calibration with eight (8) polystyrene standards of known mean molecular weight comprised between 600 and 1700000 Daltons. The SEC equipment used was an Agilent Technologies device, 1200 Series. The samples were solubilized in CHCl₃ at a rate of 0.3% (weight/volume) and eluted at a flow rate of 1 ml.min⁻¹ through a 10 µm PL gel pre-column and two 5 µm gradient PL gel mixed-d columns. The injected volume was 100 µl.

¹H NMR spectra were recorded using a Bruker AMX-500 apparatus at r.t. in CDCl₃ (4 mg/0.6 mL).

Thermal characterization of polymers has been performed by differential scanning calorimetry, on a DSC Q200 device by TA Instruments. Samples to be analyzed of 5 to 10 mg have been placed in a hermetically closed aluminium shell. The device applies a heating curve and records the calorimetric or thermal response with reference to a standard.

The following reaction scheme is an example of a polymerization process of the invention.

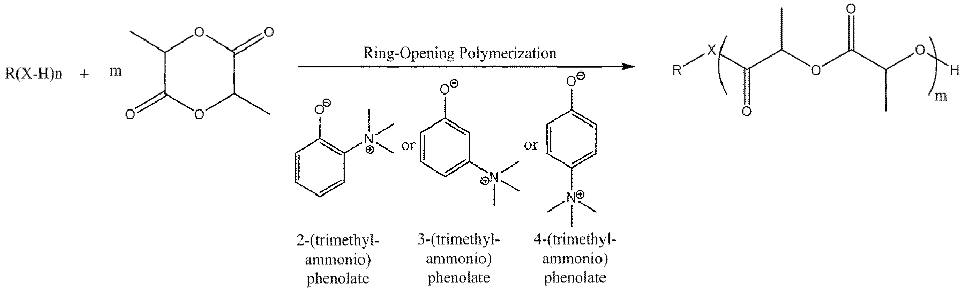

### Example 1: polymerization of L-LA with 3-(trimethylammonio)phenolate

0.004 g (or 2.77x10⁻⁵ mol) of 3-(trimethylammonio)phenolate, 0.0064 g (or 2.77x10⁻⁵ mol) of 1-pyrenemethanol and 0.2 g (or 1.39x10⁻³ mol) L-LA are poured into a flask under nitrogen pressure (O₂ < 5 ppm; H₂O < 1 ppm) and are solubilized in 0.48 ml CHCl₃. The mixture is maintained under magnetic stirring at ambient temperature during 1 hour. The polymer is precipitated in cold methanol. The polymer shows a molecular weight of 12300 g.mol⁻¹ and a dispersity of 1.04 for a 99% monomer conversion. The poly(L-LA) shows a glass transition temperature (Tg) of 56°C, a crystallization point at 108°C and two melting points at 142 and 152°C (ΔH_{f} = 37.4 J.g⁻1). ¹H NMR in CDCl₃ shows two signals: one quadruplet at 5.17 ppm for the -CH- of the P(L-LA) backbone and one singulet at 1.59 ppm for the -C*H₃* of the P(L-LA) backbone attesting the absence of racemization.

### Example 2: polymerization of L-LA with 3-(trimethylammonio)phenolate

0.004 g (or 2.77x10⁻⁵ mol) of 3-(trimethylammonio)phenolate, 0.0064 g (or 2.77x10⁻⁵ mol) of 1-pyrenemethanol and 0.2 g (or 1.39x10⁻³ mol) L-LA are poured into a flask under nitrogen pressure (O₂ < 5 ppm; H₂O < 1 ppm) and are solubilized in 0.48 ml THF. The mixture is maintained under magnetic stirring at ambient temperature during 4 hours. The polymer is precipitated in cold methanol. The polymer shows a molecular weight of 8000 g.mol⁻¹ and a dispersity of 1.05 for a 87% monomer conversion.

### Example 3: polymerization of L-LA with 4-(trimethylammonio)phenolate

0.004 g (or 2.77x10⁻⁵ mol) of 4-(trimethylammonio)phenolate, 0.0064 g (or 2.77x10⁻⁵ mol) of 1-pyrenemethanol and 0.2 g (or 1.39x10⁻³ mol) L-LA are poured into a flask under nitrogen pressure (O₂ < 5 ppm; H₂O < 1 ppm) and are solubilized in 0.48 ml CHCl₃. The mixture is maintained under magnetic stirring at ambient temperature during 18 hours. The polymer is precipitated in cold methanol. The polymer shows a molar weight of 10400 g.mol⁻¹ and a dispersity of 1.04 for a 87% monomer conversion.

### Example 4: polymerization of L-LA with 2-(trimethylammonio)phenolate

0.004 g (or 2.77x10⁻⁵ mol) of 2-(trimethylammonio)phenolate, 0.0064 g (or 2.77x10⁻⁵ mol) of 1-pyrenemethanol and 0.2 g (or 1.39x10⁻³ mol) L-LA are poured into a flask under nitrogen pressure (O₂ < 5 ppm; H₂O < 1 ppm) and are solubilized in 0.48 ml CHCl₃. The mixture is maintained under magnetic stirring at ambient temperature during 18 hours. The polymer is precipitated in cold methanol. The polymer shows a molecular weight of 13500 g.mol⁻¹ and a dispersity of 1.17 for a 99% monomer conversion.

### Example 5: polymerization of L-LA with 3-(trimethylammonio)phenolate

0.002 g (or 1.39x10⁻⁵ mol) of 3-(trimethylammonio)phenolate, 0.07 g (or 1.39x10⁻⁵ mol) of poly(ethyleneoxide)monomethymether and 0.21 g (or 1.39x10⁻³ mol) L-LA are poured into a flask under nitrogen pressure (O₂ < 5 ppm; H₂O < 1 ppm) and are solubilized in 0.48 ml CHCl₃. The mixture is maintained under magnetic stirring at ambient temperature during 3 hours. The polymer is precipitated in cold methanol. The polymer shows a molecular weight of 26800 g.mol⁻¹ and a dispersity of 1.06 for a 99% monomer conversion.

### Example 6: polymerization of L-LA with 3-(trimethylammonio)phenolate

0.002 g (or 1.39x10⁻⁵ mol) of 3-(trimethylammonio)phenolate, 0.0012 g (or 1.39x10⁻⁵ mol) of 1,4-butanediol and 0.21 g (or 1.39x10⁻³ mol) L-LA are poured into a flask under nitrogen pressure (O₂ < 5 ppm; H₂O < 1 ppm) and are solubilized in 0.48 ml CHCl₃. The mixture is maintained under magnetic stirring at ambient temperature during 3 hours. The polymer is precipitated in cold methanol. The polymer shows a molecular weight of 19100 g.mol⁻¹ and a dispersity of 1.17 for a monomer conversion rate of 99%.

### Example 7: polymerization of trimethylenecarbonate with 3-(trimethylammonio)-phenolate

0.0025 g (or 1.75x10⁻⁵ mol) of 3-(trimethylammonio)phenolate, 0.004 g (or 1.75x10⁻⁵ mol) of 1-pyrenemethanol and 0.178 g (or 1.75x10⁻³ mol) TMC are poured into a flask under nitrogen pressure (O₂ < 5 ppm; H₂O < 1 ppm) and are solubilized in 0.5 ml CHCl₃. The mixture is maintained under magnetic stirring at ambient temperature during 24 hours. The polymer is precipitated in cold methanol. The polymer shows a molecular weight of 12800 g.mol⁻¹ and a dispersity of 1.04 for a monomer conversion rate of 97%.

### Example 8: polymerization of trimethylenecarbonate benzyl ester with 3-(trimethylammonio)-phenolate

0.0025 g (or 1.75x10⁻⁵ mol) of 3-(trimethylammonio)phenolate, 0.004 g (or 1.75x10⁻⁵ mol) of 1-pyrenemethanol and 0.437 g (or 1.75x10⁻³ mol) TMC-Bn are poured into a flask under nitrogen pressure (O₂ < 5 ppm; H₂O < 1 ppm) and are solubilized in 0.46 ml CHCl₃. The mixture is maintained under magnetic stirring at ambient temperature during 24 hours. The polymer is precipitated in cold methanol. The polymer shows a molecular weight of 13800 g.mol⁻¹ and a dispersity of 1.10 for a monomer conversion rate of 98%.

### Example 9: polymerization of L-LA with 3-(trimethylammonio)phenolate

0.0042 g (or 2.78x10⁻⁵ mol) of 3-(trimethylammonio)phenolate, 0.0032 g (or 1.39x10⁻⁵ mol) of 1-pyrenemethanol and 0.2 g (or 1.39x10⁻³ mol) L-LA are poured into a flask under nitrogen pressure (O₂ < 5 ppm; H₂O < 1 ppm). The mixture is maintained under magnetic stirring at 140°C during 30 min. The polymer is precipitated in cold methanol. The polymer shows a molecular weight of 10000 g.mol⁻¹ and a dispersity of 1.14 for a 70% monomer conversion. The poly(L-LA) produced shows a Tg of 63°C, a crystallization point at 98°C and a melting point at 152°C (ΔH_{f} = 39.9 J.g⁻¹). ¹H NMR in CDCl₃ shows two signals: one quadruplet at 5.17 ppm for the -CH- of the P(L-LA) backbone and one singulet at 1.59 ppm for the -C*H₃* of the P(L-LA) backbone attesting the absence of racemization.

### Example 10: polymerization of L-LA with 3-(trimethylammonio)phenolate

0.0006 g (or 3.47x10⁻⁶ mol) of 3-(trimethylammonio)phenolate, 0.0008 g (or 3.47x10⁻⁶ mol) of 1-pyrenemethanol and 1 g (or 6.95x10⁻³ mol) L-LA are poured into a flask under nitrogen pressure (O₂ < 5 ppm; H₂O < 1 ppm) and are solubilized in 2.4 ml CHCl₃. The mixture is maintained under magnetic stirring at ambient temperature during 168 hours. The polymer is precipitated in cold methanol. The polymer shows a molecular weight of 97000 g.mol⁻¹ and a dispersity of 1.18 for a 93% monomer conversion.

## Claims

1. A process for the preparation of polyesters or polycarbonates comprising
(i) the provision of cyclic esters or cyclic carbonates, (ii) polymerizing by ring-opening in the presence of a betaine based metal-free catalyst and under polymerizing conditions.

2. Process according to claim 1 wherein the betaine catalyst includes an anionic group -X- and a cationic group -(R₂)₃Y⁺ wherein X is S, O or Se, Y is N or P, R₂ is linear or cyclic alkyl.

3. Process according to claim 2 wherein the betaine catalyst shows the following formula
-X-R₁-Y⁺(R₂)₃
wherein X is S, O or Se,
Y is N or P,
R₁ is linear or cyclic alkyl or aryl, and
R₂ is linear or cyclic alkyl.

4. Process according to any preceding claim wherein the process comprises at least one of the following features:
wherein the polymerizing conditions include the presence of an alcohol or amine based initiator;
wherein the polymerizing conditions include the presence of an alcohol or amine based initiator and wherein the initiator shows the chemical formula R(X-H)ₙ wherein X is NH or O and R is a substituted or non-substituted alkyl or ether group;
wherein the polymerizing conditions include the presence of an alcohol or amine based initiator and wherein the initiator is selected from the group consisting of 2-propanol, 1-butanol, 1-hexanol, 1-octanol, 1-pyrenemethanol, 9-anthracenemethanol, poly(oxyethylene) α-methyl, ω-hydroxyl, 1,3-propanediol, 1,3-butanediol, 1,4-butanediol, 1,6-butanediol, 1,6-hexanediol, 1,7-heptanediol, 1,8-octanediol, poly(oxyethylene)α,ω-hydroxyl, and mixtures thereof;
wherein the polymerizing conditions include the presence of an alcohol or amine based initiator and wherein the initiator is selected from the group consisting of propylamine, n-butylamine, hexylamine, octylamine, 1-aminopyrene, 1-aminoanthracene, 1,4-butanediamine, 1,6-hexanediamine, 1,4-cyclohexanediamine, 1,4-phenyldiamine and Jeffamines®, and mixtures thereof;
wherein the polymerizing conditions include the presence of an alcohol or amine based initiator and the amount of initiator is chosen such that the molar ratio between monomer and initiator is comprised between 20/1 and 2000/1, preferably between 30/1 and 750/1, more particularly between 50/1 and 500/1.

5. Process according to any preceding claim **characterized in that** the polymerizing conditions include the presence of an antioxidant.

6. Process according to any preceding claim wherein the process comprises at least one of the following features:
wherein the process is performed in the absence of organic solvent;
wherein the process is performed in the absence of organic solvent and the polymerization is performed at temperatures ranging from 80 to 200°C, preferably from 100 to 180°C, more particularly from 130 to 180°C.

7. Process according to any of claims 1 to 5 wherein the process comprises at least one of the following features:
wherein the process is performed in the presence of organic solvent;
wherein the process is performed in the presence of organic solvent selected from the group comprising halogenated or non-halogenated hydrocarbons, such as tetrahydrofuran (THF), chloroform (CHCl₃), dichloromethane, 1,4-dioxane or toluene, preferably THF and CHCl₃;
wherein the process is performed in the presence of organic solvent and the polymerization is carried out at temperatures ranging from 0 to 100°C, preferably from 10 to 50°C and more particularly from 20 to 40°C.

8. Process according to any preceding claims **characterized in that** the monomer concentration in the solvent is in the range from 10 to 60 % by weight of total mix.

9. Process according to any preceding claims **characterized in that** the catalyst concentration is in the range from 0.1 to 10 mol% based on the monomer, preferably from 0.5 to 3%, more preferably from 1 to 2%.

10. Process according to any preceding claim **characterized in that** polymerization is performed under pressure conditions ranging from ambient pressure to 90 bar, more particularly from ambient to 80 bar.

11. Process according to any preceding claim **characterized in that** the polymerization reaction is carried out during a period ranging from 3 min to 168 hours, preferably between 3 min and 4 hours, more preferably between 3 min and 1 hour.

12. Process according to any preceding claim **characterized in that** monomeric cyclic ester compounds are selected from compounds showing the following formula 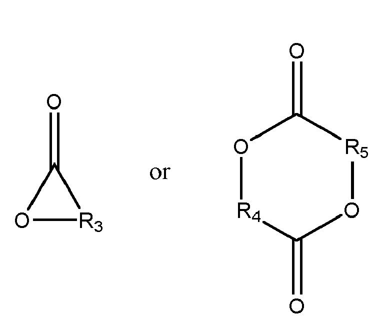 wherein R₃ is a substituted or non-substituted alkyl group showing 3 to 20 carbon atoms, preferably 3 to 10 carbon atoms, more particularly 3 to 5 carbon atoms; and R₄ and R₅ are alkyl groups of 1 to 20 carbon atoms, preferably 1 to 10 carbon atoms, more particularly 1 to 5 carbon atoms.

13. Process according to any of claims 1 to 11 **characterized in that** monomeric cyclic carbonate compounds are selected from compounds showing the following formula 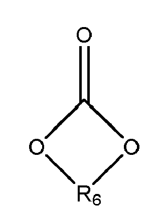 wherein R₆ is a substituted or non-substituted alkyl group showing 1 to 20 carbon atoms, preferably 1 to 10 carbon atoms, more particularly 2 to 5 carbon atoms.

14. Polyester or polycarbonate obtained in accordance with the process of any of claims 1 to 13, notably wherein the polyester or polycarbonate shows a molecular weight ranging from 500 to 100000 g.mol⁻¹ with a dispersity of 1.01-2.00.

15. A product selected from the group consisting of: packaging, food packaging, packaging sheets, fibers, textile fibers, electronics parts, printed circuit boards, integrated circuit chips, suture material, implants and active ingredient vectors; wherein the product comprises polyester or polycarbonate according to claim 14 or polyester or polycarbonate manufactured in accordance with any of claims 1 to 13.
